(19) Europäisches Patentamt
European Patent Office
Office européen des brevets

(11) **EP 2 399 981 A1**

(12) **EUROPEAN PATENT APPLICATION**

(43) Date of publication:
28.12.2011 Bulletin 2011/52

(21) Application number: 10167517.1

(22) Date of filing: 28.06.2010

(51) Int Cl.:
*C11D 3/37* (2006.01)  *C11D 17/00* (2006.01)
*B01J 2/00* (2006.01)  *C11D 3/33* (2006.01)
*C08J 3/12* (2006.01)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: Akzo Nobel Chemicals International
B.V.
3811 MH  Amersfoort (NL)

(72) Inventors:
• Van Lare, Cornelis Elizabeth Johannus
NL-6602 GE, WIJCHEN (NL)
• Heus, Martin
NL-6844 HK, ARNHEM (NL)

(74) Representative: Alferink, Petrus J.T.
Akzo Nobel N.V.
Legal, IP & Compliance
P.O. Box 9300
6800 SB  Arnhem (NL)

(54) **Particles of a glumatic acid N,N-diacetate chelating agent coated with poly vinyl alcohol PVOH**

(57)    The present invention relates to a coated particle containing a particle and a coating, wherein the particle contains glutamic acid N,N-diacetic acid or a partial salt thereof of the formula HnYm-GLDA, wherein Y is a cation, selected from the group of sodium, potassium and mixtures thereof, n+m = 4 and wherein the coating contains at least one vinyl alcohol (co)polymer having a degree of hydrolysis of between 85 and 98% or having a degree of hydrolysis of 98% or higher and a Höppler viscosity (in 4% aqueous solution measured at 20°C in accordance with DIN 53015) of less than 10 cP, a process to make such coated particle and the use thereof.

EP 2 399 981 A1

**Description**

The invention relates to particles of (salts of) glutamic acid N,N-diacetic acid, a chelating agent of the formula COOH-CH(-CH$_2$-CH$_2$-COOH)-N-(CH$_2$-COOH)$_2$, abbreviated as GLDA, which are coated, to processes to produce said particles, and to the use of such particles.

The detergent market is currently undergoing important changes. Due to ecological and regulatory reasons the use of phosphate in high concentrations in detergent formulations is to be banned altogether or must at least be greatly reduced. The formulators of detergent products have to find alternatives to replace the phosphate compounds, with the most promising replacements being biodegradable chelating agents such as GLDA. Such chelating agents are used in a concentration from 5% to 60%. Many detergent formulations contain (co-) builders, which are typically polymers, such as e.g. polyacrylates, phosphonates, phosphates, silicates or zeolites. These co-builders are present in formulations in a concentration from 1 % to 50%.

In powder or tabs detergent formulations, solid raw materials are required by the formulator. In for example automatic dishwashing (ADW) applications, the raw materials have to be in granule form to improve the tabletting and solids handling of the formulation. These granules typically have a size comprised between 300 and 2,000 microns. The usual form in which glutamic acid N,N-diacetic acid (GLDA) and its salts are available is a liquid with an active content from 35% to 50%. After drying the substance, the powder or granules, especially when obtained in the amorphous state, show hygroscopic properties to some extent, which makes them difficult to use for the ADW formulators. Moreover, the granules obtained from a granulation process (such as fluid bed granulation) are somewhat brittle and thus cannot grow easily to the required size, resulting in slow processing and lots of fines. In addition, whether in powder or granule form, the (amorphous) chelating agent GLDA exhibits hygroscopic properties, and this will render the material sticky and thus introduce storage, handling, and manufacturing problems. Flow properties of particles are critical in many ways. During manufacture of the particles themselves, they must flow smoothly relative to one another, e.g. in a fluid bed. Additionally, they must then be successfully transported to storage and transport containers. Finally, they must again be transported from storage and fed into a powder or tablet manufacturing facility. Flow problems arise due to several causes. For chelating agents, poor flow can be due to low glass transition temperatures, tackiness, wetness, and physical entanglement of multifaceted, irregularly shaped particles.

GLDA will move into the ADW market and likely into many other fields where a strong, green chelate is needed. The term "green" here denotes materials with a high renewable carbon content, a sustainable environmentally friendly production process, and/or a positive biodegradability assessment. While the state of the art builders used in detergent formulations, such as sodium tripolyphosphate (STPP) and nitrilo triacetic acid (NTA), do not require a co-granulation or coating process, the hygroscopic, dusty, and sticky properties of solid GLDA will make co-granulation or coating highly desirable.

It may be noted that documents like WO 2006/002954, WO 2006/003434, and GB 2415695 describe particles of other chelating agents than GLDA, such as of methylglycine N,N-diacetic acid (MGDA) matrix encapsulated with polymeric materials such as polyethylene glycol and polyvinyl pyrrolidone. However, not only do these documents not relate to coated particles of GLDA, also no disclosure or suggestion is made of coating the chelating agent with more specific coating materials to improve the properties of the coated particles. Additionally, unless very high levels of coating material are used, matrix encapsulation at best gives a partial coating layer but is known to not result in a closed coating layer.

Plain mixtures of chelating agent and additives are known in the art. Such mixtures are disclosed for example in EP 884 381, which document discloses a mixture of GLDA, an anionic surfactant, a salt of a polymer comprising carboxylic acid units and a crystalline aluminosilicate in specific proportions. EP 1803801 discloses a mixture of GLDA with at least one polyethylene glycol, a nonionic surfactant, polyvinyl alcohol, polyvinyl pyrrolidone, polyalkylene glycols or derivatives thereof. However, mixing the chelating agent and the other additives will hardly have any beneficial effect in reducing the hygroscopic behaviour of the chelating agent.

The object of the invention is to provide stable coated particles of GLDA of which the hygroscopic properties are improved by the use of a novel class of coatings materials. Another object of the present invention is to provide a process to make coated particles of GLDA wherein a closed layer of coating is obtained while avoiding the use of very high levels of coating material. In addition, the invention provides stable coated particles of GLDA that are relatively cheap to prepare both as the ingredients are not too expensive but as well because the preparation process is relatively straightforward.

It has now been found that when a specific group of vinyl alcohol (co)polymers is used as a coating, a coated particle of GLDA is acquired of which the hygroscopic properties are good, while the process to make it is quite simple and cheap. In addition, in the coated particles of the present invention when used in an aqueous environment the coating is chosen such that an efficient release of the active ingredient is achieved. Finally, the coated particles of the invention have a beneficial ratio of ingredients that are active in their intended use to total ingredients.

The present invention now provides coated particles containing a particle and a coating, wherein the particle contains glutamic acid N,N-diacetic acid or a partial salt thereof of the formula HnYm-GLDA, wherein Y is a cation, that is sodium, potassium or a mixture thereof, n+m = 4, and the coating comprises a vinyl alcohol (co)polymer having a degree of hydrolysis of between 85 and 98% or having a degree of hydrolysis of 98% or higher and a Höppler viscosity (in 4% aqueous solution measured at 20°C in accordance with DIN 53015) of less than 10 cP.

The invention further provides a process to make the above coated particles containing a particle and a coating, wherein the particle contains glutamic acid N,N-diacetic acid or a partial salt thereof of the formula HnYm-GLDA, wherein Y is a cation, that is sodium, potassium or a mixture thereof, n+m = 4, and the coating comprises at least one vinyl alcohol (co)polymer having a degree of hydrolysis of between 85 and 98% or having a degree of hydrolysis of 98% or higher and a Höppler viscosity (in 4% aqueous solution measured at 20°C in accordance with DIN 53015) of less than 10 cP comprising the steps of applying the vinyl alcohol (co)polymer on the particles to give a coating layer.

Finally, the invention provides the use of the coated particles in detergents, agriculture, in oil field applications, or in water treatment. Preferably the particles are used in institutional and industrial cleaning compositions or household cleaning compositions.

The coating surrounding the GLDA chelating agent is such that it will act to sufficiently delay the chelating agent from absorbing moisture thereby reducing the rate of particles sticking together or forming a solid mass. At the same time the coating layer is sufficiently readily water soluble to release the chelating agent sufficiently rapidly in a final application wherein this is desired, in addition, without leaving a measurable amount of coating residue on the particles. Consequently, the invention provides an excellent balance between the barrier properties and dissolution properties of the coating. Also, it was found that the coating of the invention has an improved adherence to the core and therefore the coated particles of the invention have good segregation and attrition resistance. Further, the particle once formulated will provide a stable particle size that will not change during storage or transportation. Further, the chelating agent in the (structured) particles can be protected from the effects of UV rays, moisture, and oxygen. Chemical reactions between incompatible species of particles can be prevented due to the coating and the particles exhibit greatly improved storage, handling, and manufacturing properties.

The term "coated particles" as used throughout this application is meant to denote all particles (e.g. powder or granules) containing GLDA ("the particle") which have been encapsulated, coated, matrix coated, or matrix encapsulated, with at least one other material ("the coating"), as a consequence of which the particles have other physical characteristics than the chelating agent without this coating. Coated particles, unlike plain mixtures, have mixtures more coating material on the outer side of the coated particle and more core material on the inner side of the coated particle. Preferably the coating is a closed layer as established by scanning electron microscopy/EDX, which is always the case if the coating is used in an amount of at least about 30 wt% and when a matrix encapsulation process is used and if the process is a fluidized bed encapsulation process when at least 5 wt% of coating mixture is applied on the basis of the total particle. The particles can for instance have a modified colour, shape, volume, apparent density, reactivity, durability, pressure sensitivity, heat sensitivity, and photosensitivity compared to the original chelating agent. To be more specific, the coating layer serves to improve the storage stability of the granule and to preserve the flowability. This is achieved as the coating layer reduces or delays the absorption of water, i.e. reduces the hygroscopicity.

Preferably, in the process to prepare coated particles in accordance with the invention, the GLDA-containing particle is in substantially dry form, wherein substantially dry means that the GLDA- containing particle has a water content of below 10 wt%, preferably of below 6 wt%, on the basis of (total) solids.

Coated particles of GLDA of the invention may take several different forms depending on the processing conditions and the choice of materials.

Referring to the Figures, they provide an illustration of several particles as further described below.

Figures 1A-B depict state of the art particles that are not coated.

Figure 1A depicts schematically two different median particle sizes for a dried chelating agent. For example, 5-50 pm particles can be made (e.g. by spray drying) or 50-500 pm particles can be made (e.g. by fluid bed agglomeration). Figure 1B depicts schematically that when a structuring agent is used to provide more robust granules, the maximum size of the granules created (e.g. by fluid bed granulation) can be increased to 3,000 pm.

Figures 2A-C depict coated particles of this invention.

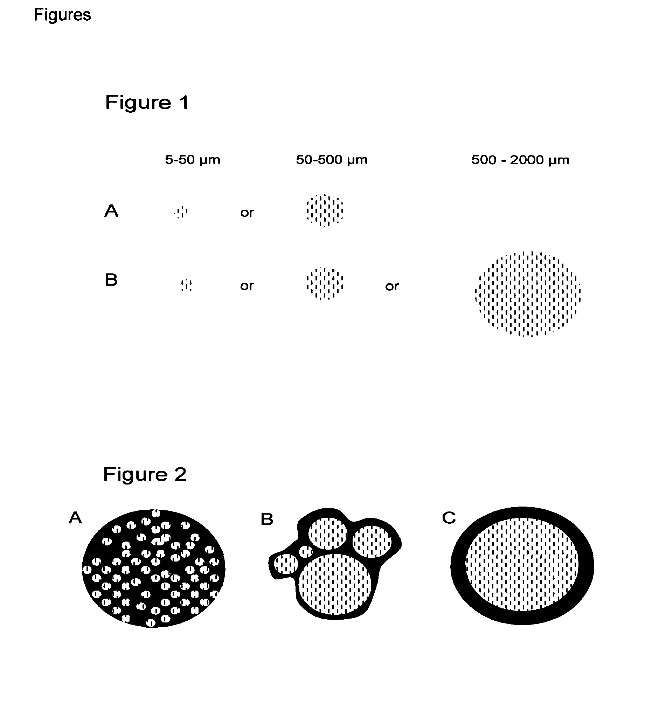

Figure 2A depicts the particles of this invention, where small (5-50 $\mu$m) particles are coated in a continuous matrix of coating polymer and, the matrix encapsulation coating is acquired by spray drying with a high amount of coating polymer. Figure 2B depicts a particle of this invention in which a set of larger chelating agent granules (or structured chelating agent granules) are coated with a thin layer of coating polymer. Figure 2C e.g. depicts the coating of a large structured granule in which an exterior polymer coating is created around an inner structured core.

In a preferred embodiment of the invention when making a cross-section of the coated particles they contain in the inner 50% (on the basis of the diameter) of the cross-section more than 50% of core material (which is roughly the case in the particle of Figure 2A), more preferably more than 80% (which is roughly the case in the particle of Figure 2B), and most preferably more than 90% (which is the case in the particle of Figure 2C).

It is known to those skilled in the art that the application of the coating material controls the particle design as e.g. shown in Figure 2, and that thus the method to apply the coating material can lead to different particles. Each particle can exhibit the improved qualities of the current invention and will exhibit a number of the different advantages. For instance, the particle depicted schematically by Figure 2C will due to the large particle size, need the lowest amount of coating to achieve a closed layer of coating material . This particle, however, may require the use of a structuring agent to provide a robust inner structured particle. However, in cases where little structuring material is desired, a particle more similar to Figure 2A may be created.

This invention also covers the use of the coated particles in detergents, agriculture, in oil field applications, in water treatment, and other applications that require or benefit from the multiple benefits provided by this invention, i.e. the dissolution of crystals/scale, the sequestration of metal ions which can otherwise lead to precipitation, and the inhibition of scale growth. One preferred embodiment of this invention is the use of the coated particles in automatic dish washing. Another preferred embodiment of this invention is the use of the particles in oil well completion and production operations.

Preferably the vinyl alcohol (co)polymer has a melting point of more than 100 °C. The melting point is preferably below 300 °C.

The vinyl alcohol (co)polymer having a degree of hydrolysis of 85 to 98% preferably has a Höppler viscosity as 4% aqueous solution of 1 to 100 mPas.

The vinyl alcohol (co)polymer suitable as coating is often a synthetically prepared polymer. The vinyl alcohol (co)polymer may be synthetically modified and besides vinyl alcohol and vinyl acetate monomers may contain other ethylenically unsaturated monomers.

The vinyl alcohol (co)polymer suitable as coating can be chosen from the group of (partially) hydrolyzed polyvinylacetates, (partially) hydrolyzed polyethylene-vinylacetates, or mixtures thereof.

The partially hydrolyzed vinyl alcohol (co)polymers and their derivatives can be modified for instance with amino groups, carboxylic acid groups and/or alkyl groups, and can have a degree of hydrolysis of preferably about 85 to 98 mol.%, and a Höppler viscosity in 4% aqueous solution of preferably 1 to 100 mPas, in particular of about 3 to 50 mPas (measured at 20°C in accordance with DIN 53015). Other copolymerizates include styrene-maleic acid and/or vinyl ether-maleic acid copolymerizates. Quite especially preferred are in particular partially saponified, optionally modified, polyvinyl alcohols with a degree of hydrolysis of 85 to 98 mol.% and a Höppler viscosity as 4% aqueous solution of 1 to 50 mPas

The coating layer comprises at least one vinyl alcohol (co)polymer wherein the weight% of vinyl alcohol (co) polymer in the coating on dry basis is preferably between 70 and 99.5 wt%, more preferably between 80 and 99.5 wt%, even more preferably between 85 and 98 wt% and most preferably between 88 and 97 wt%.

Additionally, it should be understood that the coated particles of the invention may contain other components besides the at least one vinyl alcohol (co)polymer component in the coating, like for example a low amount (i.e. less than 30 wt%, preferably less than 20 wt%, more preferably less than 10 wt% on total coating) of another water soluble polymer.

Besides the embodiments wherein the coating contains other ingredients, it is also envisaged that the coating may contain two or more vinyl alcohol (co)polymers.

In the event that the coating contains more than one water soluble polymer, at least one thereof is a vinyl alcohol (co)polymer of the invention having a degree of hydrolysis of between 85 and 98% or having a degree of hydrolysis of 98% or higher and a Höppler viscosity (in 4% aqueous solution measured at 20°C in accordance with DIN 53015) of less than 10 cP and is preferably used in a higher amount than the other polymer(s), or, used in an outer coating layer.

In addition, the coating may be applied in two or more coating layers that may be the same or different in their composition.

When using two or more coating layers it is preferred to have (more of) the vinyl alcohol (co) polymer of the invention in the outer layer applied on the particle. When the coating is made of more than one layer, in yet another embodiment one of the coating layers, preferably the inner coating may contain a compound that is functional in the end application of the particle (i.e. a "functional additive"). When the end application is in a detergent composition, the inner coating more preferably contains a scale inhibitor or another building compound/chelating agent (citrate, MGDA), a pH buffer (sodium carbonate or silicate) or a hydrophobic polymer.

It should be understood that in one embodiment the coated particles of the invention in addition to GLDA may contain another chelating agent, such as for example methylglycine N,N-diacetic acid (MGDA), ethylenediamine N,N, N',N'-tetraacetic acid (EDTA), N-hydroxyethyl ethylenediamine N,N',N'-triacetic acid (HEDTA), diethylenetriamine penta acetic acid (DTPA), or a salt of any of these agents. This further chelating agent may be present in the core or in the coating.

In a more preferred embodiment where the coated particle will be used in a detergent composition the inner coating layer comprises a salt that is functional in the detergent composition such as sodium carbonate, sodium citrate or sodium silicate. In an even more preferred embodiment, to give the inner coating salt layer an improved strength, the inner coating in addition contains a water soluble polymer, a polysaccharide or a scale inhibiting polymer.

In yet another embodiment an additional outer layer may be applied on the coated particles that may comprise a flowing aid such as fumed silica.

In an embodiment the particle (core) of the invention may comprise further functional additives that can be chosen from the group of scale-inhibiting additives, structurants, (co)builders, chelating agents, and pH buffers.

Preferably, if a further additive is present in the core, the core contains as a further additive a (co)builder. In a more preferred embodiment of the present invention, the core is structured with a suitable structurant. Accordingly, the particles of the invention may optionally comprise structurants which improve the physical strength of the particle.

The (co)builder can include several salts and/or inorganic additives which contribute to the strength of the resulting particles and which also function as sequestration materials or as builders. The building salts found to be functional as a structurant for the chelating agents are citrate, carbonate, silicate, and sulfate salts. Preferably, the sodium salts of materials are used. Of these salts, sodium carbonate, sodium citrate, and sodium silicate are preferred due to their functionality (e.g. as a scale-inhibiting additive). Alternatively, inorganic (nano-) particles, such as silica can be used.

In another embodiment the coating layer(s) may comprise further functional additives that can be chosen from the group of scale-inhibiting additives, structurants, (co)builders, and pH buffers.

Examples of functional additives are salts like citrate, silicate or carbonate salt, such as the alkali metal salt of any of these that besides their above-indicated functionality have a pH buffering effect as well, or scale inhibiting polymers. Scale-inhibiting polymers can have a variety of chemical forms and are specifically selected from synthetic, natural, and hybrid scale-inhibiting polymers. The synthetic polymer includes selected levels of carboxylation, sulfonation, phosphorylation, and hydrophobicity to give good film-forming and humidity resistance as well as good co-building and crystal growth inhibition properties. The natural polymers are likewise prepared with a combination of molecular weight modification, carboxylation, sulfonation, phosphorylation, and hydrophobic properties to give good co-building and crystal growth inhibition properties. The hybrid polymers combine natural and synthetic monomers and polymers to give good co-building and crystal growth inhibition properties.

The advantage of using scale-inhibiting polymers and/or salts as an additive is that these materials can be or are already used as co-builder or pH buffer in most detergent formulations and will therefore have a beneficial effect during the wash. Therefore, the current invention gives a superior product which provides other benefits such as co-builder or crystal growth inhibition. Also, such particles of the present invention have excellent flow properties.

The (structured) particles have many useful functions and can be employed in many different areas, frequently connected with applications in which the chelating agent contents of the particle have to be released into the surrounding environment under controlled conditions.

The amount of GLDA in the coated particle in one embodiment is at least 30 wt%, more preferably at least 50 wt %, even more preferably at least 60 wt%, most preferably at least 90 wt%, and up to 95 wt% on the basis of the total weight of the particle.

The coated particles of the invention in one embodiment contain 15 to 95 wt% of the GLDA and optionally other chelating agents, 5 to 85 wt% of the coating, and 0 to 40 wt% of further additives. In a preferred embodiment they contain 30 to 95 wt% of the GLDA and optionally other chelating agents, 5 to 50 wt% of the coating and 0 to 20 wt% of further additives. Most preferred, the coated particles contain 60-95 wt% of GLDA and optionally other chelating agents, 5 to 20 wt% of the coating and 0 to 20 wt% of further additives, the total amounts of ingredients adding up to 100 wt%.

Preferably, the particle comprises HnYm-GLDA wherein m is at least 1 and n is at most 3. However, particles wherein the values of m and n are differently can also be used. In such event other components in the particle or in the coating may exchange protons with the GLDA (i.e. accept therefrom or provide thereto) ensuring that effectively the desired number of hydrogen atoms are exchangeably available per GLDA anion. In a more preferred embodiment of the invention m is 1.5 - 3.8, most preferred m is 2.5 - 3.6.

The particles of the invention in one embodiment have a particle size of 200 to 2000 microns (pm), most preferably 500 -1,000 microns.

The process of the present invention to prepare coated particles containing a particle and a coating comprises the step of applying the coating on the particles. wherein the particle contains glutamic acid N,N-diacetic acid or a partial salt thereof of the formula HnYm-GLDA, wherein Y is a cation, selected from the group of sodium, potassium and mixtures thereof, n+m = 4, and wherein the coating contains at least one vinyl alcohol (co)polymer having a degree of hydrolysis of between 85 and 98% or having a degree of hydrolysis of 98% or higher and a H6ppler viscosity (in 4% aqueous solution measured at 20°C in accordance with DIN 53015) of less than 10 cP,

In a preferred embodiment in the process of the invention to prepare the coated particle in a step preceding applying the coating mixture or the vinyl alcohol (co)polymer on the particle, a salt layer is applied on the particle, preferably a citrate, silicate, glycolate, oxalate, lactate, succinate, malonate, maleate, diglycolate, fumarate, stearate, chloride, nitrate, percarbonate or carbonate salt

Suitable processes to apply the coating on the particle in accordance with the process of the invention are for example disclosed in the Kirk Othmer Encyclopedia of Chemical Technology, Vol 16, Microencapsulation pages 438 -463 by C.Thies; JohnWiley&Sons Inc. 2001)) and include but are not limited to the following processes:

" Fluidized-bed encapsulation technology which involves spraying shell material in solution or hot melt form onto solid particles suspended in a stream of heated gas, usually air. Although several types of fluidized-bed units exist, so-called top and bottom spray units are used most often to produce microcapsules.

In top-spray units, hot melt shell materials are sprayed onto the top of a fluidized-bed of solid particles. The coated particles are subsequently cooled producing particles with a solid shell. This technology is used to prepare a variety of encapsulated ingredients. In bottom-spray or Wurster units the coating material is sprayed as a solution into the bottom of a column of fluidized particles. The freshly coated particles are carried away from the nozzle by the airstream and up into the coating chamber where the coating solidifies due to evaporation of solvent. At the top of the column or spout, the particles settle. They ultimately fall back to the bottom of the chamber where they are guided once again by the airstream past the spray nozzle and up into the coating chamber. The cycle is repeated until a desired capsule shell thickness has been reached. Coating uniformity and final coated particle size are strongly influenced by the nozzle(s) used to apply the coating formulation. This technology is routinely used to encapsulate solids, especially pharmaceuticals (qv). It can coat a wide variety of particles, including irregularly shaped particles. The technology generally produces capsules >100-150 micrometer, but can produce coated particles <100 micrometer. "

In yet another example of a coating process, the coated particles are prepared by spraying the coating onto the particle using a fluid bed coating process as for example described by E. Teunou, D. Poncelet; Batch and continuous fluid bed coating review and state of the art, J. Food Eng. 53 (2002), 325 - 340. In the conventional fluidized bed process, the fluidized bed is a tank with a porous bottom plate. The plenum below the porous plate supplies low pressure air uniformly across the plate leading to fluidization. The process comprises the following steps:

(a) a compound to be encapsulated in the form of a powder is fluidized with air at an air inlet temperature below the melting temperature of the powder;
(b) a coating liquid comprising a water based coating solution is sprayed onto the powder via a nozzle, followed by subsequent evaporation of the water by using elevated temperatures in the fluid bed. This leaves behind a coating layer on the particles with the compound in the core.

The process of the present invention may involve a preceding step of preparing the particle containing GLDA on which in a subsequent step the coating mixture is applied.

The particle can be made by drying a solution of GLDA and the optional further additives.

Drying the solution can be done by any drying method known to the person skilled in the art, like evaporating off the water via e.g. spray drying, fluid bed spray drying, fluid bed granulation.

The dry material may optionally be further processed, for example by compacting and/or crushing the material until it has the desired shape, i.e. is in the form of core particles of the desired size.

The step of compacting includes any method wherein the particles are agglomerated by applying an external force on them, for instance by extruding, tabletting or agglomerating them under a pressure of suitably from 40 to 200 MPa, preferably a pressure of from 50 to 120 MPa, most preferably of from 75 to 100 MPa.

The pressure used for compacting the material is the pressure applied at uniaxial compaction of a tablet (leading to a certain density of the compacted particle mixture). However, compacting may suitably be done by other compactors, like a roll compactor. In such cases, the pressure to be used is the pressure that results in the same density of the compact as in uniaxial compaction.

The step of crushing includes any method whereby the size of the particles is decreased and is intended to include methods like breaking, crushing, or milling.

In another more preferred embodiment of the process of the invention the coating mixture layer is applied on the material containing the chelating agent at a pH of 2 - 11, more preferably 5-10, most preferably 7 - 10.

In a preferred embodiment of the invention the process to prepare the coated particles encompasses the preparation of a granule that is subsequently coated in a fluid bed coating process. The granule preparation is started by dissolving the chelating agent in water together with the coating material and if required a structurant. This mixture is sprayed into a hot spray drying chamber leading to the evaporation of water. The particles formed this way are recirculated in the spray chamber and at the same time spraying the water based mixture into the chamber is continued, due to which the particle grows and a granule is gradually formed. The composition gradient inside the granule can be modified by altering the composition of the spray mix while spraying it into the drying chamber. This means that the core of the particle can be higher in concentration of the compound, whereas the outer part of the particle is enriched with the coating material. The particle formed is described as a co-granule as it consists of the compound, the coating material and if required a structurant. The obtained co-granule is subsequently coated in a fluid bed process. In this process, a powder is fluidized with warm air and a water based coating solution is sprayed onto the powder. The water is evaporated leaving a coating on the particle surface. The amount of coating can be controlled easily by manipulating the spray on time and spray mix composition. To control the coating quality, it may be needed to increase the temperature of the coating solution (i.e. spray mix). This will lower the spray mix viscosity most likely leading to a better atomization and droplet formation which gives a better distribution of the coating material on the granule.

**EXAMPLES**

In all examples co-granules of GLDA and Alcoguard 4160 or granules consisting of GLDA only are used. Below the processes to manufacture those (co-)granules are described. These (co-)granules are subsequently coated with a water soluble polymer. The process to achieve such a coating is also described below. The resulting coated particles are stored in a climate chamber to follow the moisture absorption over time in order to determine the efficiency of the coating system used. The test method is described below.

**Processes used**

*Manufacture of GLDA (co-)granule*

Co-granules of GLDA and Alcoguard 4160 were produced in a spray granulation process. The co-granules were made on the basis of GLDA (Dissolvine GL-47-S and Dissolvine GL-Na-40-S available from Akzo Nobel Functional Chemicals LLC, Chicago, IL, USA) and the anti-scaling polymer Alcoguard 4160 (available as a dissolved polymer solution or in dry form from AkzoNobel Surface Chemistry LLC, Chicago, IL, USA).
To produce the co-granule, GL47S and GL-Na-40S mixed in ratio of 95:5, were mixed with Alcoguard 4160 (also abbreviated as "4160"), where the ratio of the total amounts of GLDA and Alcoguard 4160 was 80:20. This mixture was sprayed into a hot spray drying chamber leading to the evaporation of water. The particles formed this way were recirculated into the spray chamber via cyclones and at the same time spraying the water based GLDA/4160 mixture into the chamber was continued, due to which the particle grew and a granule was gradually formed. More specifically, the mixture of GLDA and 4160 was continuously sprayed into a fluid bed spray granulator type AGT, equipped with cyclones, an external filter unit, and a scrubber. During the spray granulation process, the air flow was kept between 700 - 1300 m$^3$/hour and air inlet temperatures between 100 and 250 °C were used. The particle formed is described as a co-granule as it consisted of GLDA and the anti-scaling polymer. This process resulted in a free flowing powder, described as "uncoated" co-granule.
To produce the GLDA-pure granule, the same process as described for the co-granule was used, except that in this case the spray mix consisted of GL47S and GL-Na-40S mixed in ratio of 85:15, hence no anti-scaling polymer was used.

*Manufacture* **of** *coated particles*

The "uncoated" GLDA/4160 co-granule or GLDA-pure granule was subsequently coated in a fluid bed (GEA Aeromatic Strea-1) using a Würster set-up and a two-fluid nozzle. The Würster set-up is a draft tube positioned in the center of the fluid bed, below which a nozzle is positioned that sprays fine droplets upwards into the tube. These droplets hit the granule surface and after drying leave behind some dry coating material. Using this set-up an even coating can be applied. The air inlet temperature used was 80 - 90 °C. The air flow was chosen such that visually an even fluidization was obtained, which implies a setting between 10 and 80% of the maximum air flow on the GEA Aeromatic Strea-1. The spray-on rate of the coating solution was chosen such that an even coating was obtained on the particles giving no particle aggregation (i.e. about 0.5 - 1 gram/minute), resulting in a particle coated with an even coating layer. Coating was continued until a predefined amount of coating was obtained on the particles.
For some coated particles, a Glatt laboratory fluid bed was used. In this equipment air inlet temperatures were varied between 80 and 150° C and, where not specified in below Examples, a temperature of about 100 °C was used. Spraying of the liquid was done via top spray using a twin fluid air assisted nozzle. Again, the spray rate was chosen such that aggregation was avoided and an even coating was obtained.

**Test methods**

*Moisture absorption*

The resulting powders were poured in a 1-particle thick layer onto a petri-dish and stored in a climate chamber operated at 16 °C and 60% Relative Humidity. The weight increase as a function of time was measured, as a measure for the rate of absorption of moisture. The weight increase was recomputed into a % weight increase by using the following formula:

$$\text{Weight \% increase at time t} = [\text{Weight (at t} = 0) - \text{Weight (at time t)}]/[\text{Weight (at t} = 0)].$$

***Flowability of the powder***

The flowability of a powder was determined by manually moving the petri dish that was stored in the climate chamber and visually estimating the number fraction of particles that did not stick to the dish but moved freely. Hence a flowability figure (%ff) of 100% means that all particles moved freely, a figure of 0% means that all particles were sticking completely to the dish. Flowability is considered to be acceptable when at least about 90% of the particles move freely.

***Melting temperature of poly vinyl alcohol***

Of three polyvinyl alcohol types the melting temperature was measured using a Differential Scanning Calorimeter (make Mettler Toledo). The three types tested were Mowiol 3-85, Mowiol 4-88 (both ex Kuraray Europe GmbH) and Elvanol 71-30 (ex DuPont). The powders were used as such. All three types showed similar results, with a glass transition temperature between 38 and 45 °C and a melting temperature between about 160 and 190 °C.

Example 1 Effect of PVOH - degree of hydrolysis and viscosity.

Granules were made on the basis of GLDA (Dissolvine GL-47-S and Dissolvine GL-Na-40-S, the anti-scaling polymer Alcoguard 4160 and various water soluble Mowiol polyvinyl-alcohols (all except one available from Kuraray Europe GmbH). Also a high degree of hydrolysis grade (more then 99% hydrolysed) was used from Sigma-Aldrich, laboratory grade.

The following Mowiol poly-vinyl alcohols (PVOH) ex Kuraray were tested (in increasing degree of hydrolysis and molecular weight): PVA - 505, PVA - 403, PVA - 405, SD-1000, 3 - 85, 4 - 88, 8 - 88, 13 - 88, 18 - 88, 4 - 98, 6 - 98, 10 - 98, 20 - 98. The last figure denotes the degree of hydrolysis, the first figure describes the viscosity of a 4wt% solution in water (the viscosity has a relation to the molecular weight: the higher the viscosity, the higher the molecular weight). The estimated degree of hydrolysis for PVA - 505, PVA - 405 and SD-1000 are respectively (as taken from Kurarary product information:) 73%, 81.5% (averaged), 84.5% (averaged). Also a >99% hydrolyzed PVOH (ex Sigma-Aldrich) was used.

First co-granules of GLDA and Alcoguard 4160 were produced in a spray granulation process using the same process as described before.

The "uncoated" GLDA/4160 co-granule was subsequently coated with 10wt% of the PVOH's given above in a fluid bed (GEA Aeromatic Strea-1), using a Würster set-up and a two-fluid nozzle. Air inlet temperature used was 80 °C. The air flow was chosen such that visually an even fluidization was obtained, which implies a setting between 10 and 80% of the maximum air flow on the GEA Aeromatic Strea-1.

All powders were stored in a climate chamber at 16 °C, 60% Relative Humidity. From those data, the time to reach at weight increase of 5 wt% was determined. The table 1 below shows the results sorted by the time to reach the 5wt% weight increase.

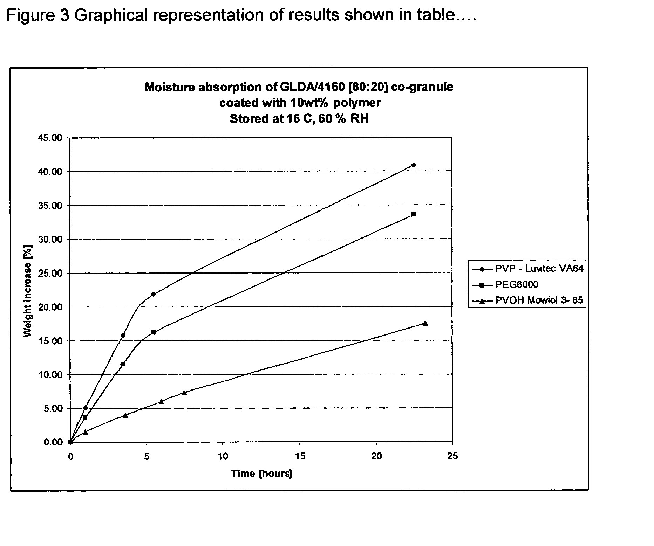

These data are also shown in Figure 3. The results were used to rank and score the various PVOH types. When the time to reach a 5wt% increase is highest, the coating has the best barrier properties. To that extent 4 levels were defined, where each level was a step of 10 hours.

Table 1 Time to reach 5wt% increase for the coated co-granule, stored at 16°C, 60% RH combined with scoring

| PVOH type | Time to 5 wt% increase | % Hydrolysis | Score |
|---|---|---|---|
| Mowiol PVA - 405 | 4,2 | 81,5 | 1 |
| Mowiol PVA - 505 | 5 | 73 | 1 |
| Mowiol SD-1000 | 8,5 | 84,5 | 1 |
| Mowiol 8 - 88 | 13 | 88 | 3 |
| Mowiol 4-88 | 16 | 88 | 3 |

(continued)

| PVOH type | Time to 5 wt% increase | % Hydrolysis | Score |
|---|---|---|---|
| Mowiol 3 - 85 | 16 | 85 | 3 |
| Mowiol 18 - 88 | 22 | 88 | 4 |
| Mowiol 10 - 98 | 25,5 | 98 | 4 |
| Mowiol 13 - 88 | 26,5 | 88 | 4 |
| Mowiol 4 - 98 | 30 | 98 | 5 |
| PVOH - 99% Hydr - Sigma | 36,5 | 99 | 5 |
| Mowiol 6 - 98 | 38 | 98 | 5 |
| Mowiol 20 - 98 | 57 | 98 | 5 |

| Score | 0 - 10 | 1 |
|---|---|---|
| | 10 - 20 | 3 |
| | 20 - 30 | 4 |
| | >= 30 | 5 |

Table 1 shows that on average the best moisture barrier properties using PVOH alone, are obtained with a high molecular weight and a high degree of hydrolysis. Best results are obtained with a degree of hydrolysis higher than or equal to 85%.

Rate of dissolution for the various PVOH types

A selection of the coated GLDA/4160 co-granules made according the process above were subsequently tested on their rate of dissolution. In this test 0.5 grams of the coated powder were dissolved in 100 grams of demi-water at various temperatures. Stirring was obtained by using a magnetic stirrer. The conductivity was measured as a function of time, to determine the GLDA release. It was first established that the PVOH has no influence on the conductivity; hence, the increase in conductivity is fully due to the release of GLDA. At the end of the test it was also visually determined whether there were any residuals in the form of undissolved PVOH present in the mixture.

The conductivity was normalised by dividing all conductivity values at a given time by the final conductivity which is reached after full dissolution of the granules. From the dissolution curves, the time to reach 80% of the normalised final conductivity was determined. These results as well as the visual observation whether there were residues present at two temperatures, are shown below in Table 2.

The various PVOH coated granules were scored to determine their relative behaviour in dissolution. It is essential for the granules to fully dissolve sufficiently fast and leave no residues. Therefore, those granules that completely dissolved in water at room temperature got the highest score of 5. If the granules dissolved completely at the slightly higher temperature of 40 °C, they got the score of 4. When they did not dissolve completely at even 40 °C, a score of 1 was given.

Table 2 Results for the coated systems tested.

| | Time to reach 80% dissolved @ 20 °C [sec] | Residue @ 20 °C [yes/no] | Residue @ 40 °C [yes/no] | Score |
|---|---|---|---|---|
| Mowiol 3-85 | 43 | no | no | 5 |
| Mowiol 4-88 | 55 | no | no | 5 |
| Mowiol 8-88 | 89 | no | no | 5 |
| Mowiol 18-88 | 144 | no | no | 5 |
| Mowiol 4-98 | 96 | yes | no | 4 |
| Mowiol 6-98 | 170 | yes | no | 4 |
| Mowiol 10-98 | 162 | yes | yes | 1 |
| Mowiol 20-98 | 200 | yes | yes | 1 |

(continued)

|  | Time to reach 80% dissolved @ 20 °C [sec] | Residue @ 20 °C [yes/no] | Residue @ 40 °C [yes/no] | Score |
|---|---|---|---|---|
| 99% Hydrolysed | 275 | yes | yes | 1 |
| Score: | | | | |

If residue at 20 °C and 40 °C is no/no: 5 (complete dissolution at room temperature)

If residue at 20 °C and 40 °C is yes/no: 4 (complete dissolution at slightly higher temperate)

If residue at 20 °C and 40 °C is yes/yes: 1 (incomplete dissolution)

Determine optimum PVOH type by combining dissolution and barrier properties

The results as shown above were combined to determine which PVOH type is needed to get a satisfactory coating. Table 3 shows the overview of these results. The Table shows that the low degree of hydrolysis PVOH's score badly on barrier properties and that the high degree of hydrolysis PVOH's score badly on dissolution properties. Therefore there is an optimum PVOH type for the coating of GLDA co-granules. Best results are found using PVOH with a degree of hydrolysis between 85 and 98%. For the PVOH's with 85-88% degree of hydrolysis any viscosity is good, for the PVOH's with a hydrolysis degree of 98%, PVOH's that have a specific viscosity give the better results.

Table 3 Overall results combining barrier and dissolution properties

| PVOH type | % Hydrolysis | Score Barrier | Score Dissolution | Total Score |
|---|---|---|---|---|
| Mowiol PVA - 505 | 73 | 1 | 5 (*) | 6 |
| Mowiol PVA - 405 | 81,5 | 1 | 5 (*) | 6 |
| Mowiol SD-1000 | 84,5 | 1 | 5 (*) | 6 |
| Mowiol 3 - 85 | 85 | 3 | 5 | 8 |
| Mowiol 4 - 88 | 88 | 3 | 5 | 8 |
| Mowiol 8 - 88 | 88 | 3 | 5 | 8 |
| Mowiol 13 - 88 | 88 | 4 | 5 (*) | 9 |
| Mowiol 18 - 88 | 88 | 4 | 5 | 9 |
| Mowiol 4 - 98 | 98 | 5 | 4 | 8 |
| Mowiol 6 - 98 | 98 | 5 | 4 | 8 |
| Mowiol 10 - 98 | 98 | 4 | 1 | 5 |
| Mowiol 20 - 98 | 98 | 5 | 1 (*) | 6 |
| PVOH - 99% Hydr - Sigma | 99 | 5 | 1 | 6 |
| (*) estimated from results of PVOH's out of same % hydrolysis group | | | | |

To achieve the desired coating layer properties specific types of PVOH need to be used. More specifically:

1) A too low degree of hydrolysis gives an insufficient moisture barrier, showing that the degree of hydrolysis has to be higher than or equal to 85%.
2) A too high degree of hydrolysis leads to the generation of unwanted residues and/or gives a too slow dissolution. This shows that the degree of hydrolysis has to be preferably less than or equal to 98%. When the degree of hydrolysis is below 98%, any viscosity of a 4wt% solution at 20 °C is acceptable. For those PVOH's where the degree of hydrolysis is above or equal to 98%, the Höppler viscosity of a 4wt% solution at 20 °C (DIN 53015) should be less than 10 cP.

It can be concluded that preferably polyvinyl alcohols are used whereof the degree of hydrolysis is between 85% and 98%. When the degree of hydrolysis is below 98%, any viscosity of a 4wt% solution at 20 24°C is acceptable. In addition PVOH's having a degree of hydrolysis of 98% or higher can be used, but the Höppler viscosity of a 4wt% solution at 20 °C (DIN 53015) of those should be less than 10 cP.

EXAMPLE 2. Comparison of polyvinyl alcohol of the invention with other polymers

Co-granules of GLDA and Alcoguard 4160 were produced in a spray granulation process. The co-granules were made on the basis of GLDA Dissolvine GL-47-S and the anti-scaling polymer Alcoguard 4160, where the ratio GLDA/4160 was 70:30. These co-granules were subsequently coated in the Aeromatic Strea-1.

Various coating materials were tested to determine which one gives a substantial delay in moisture pick-up. The following coatings were tested:

- Aquapolish MS (a combination of selected cellulosic ether polymers and hydrophobic additives) available from Biogrund GmbH
- PVDC (poly-vinylidene chloride) dispersion available from Dow Chemicals
- PVOH (poly-vinyl alcohol) Mowiol 3-85 available from Kuraray Europe GmbH
- Natrosol 250L (hydroxyethyl cellulose) available from Hercules-Aqualon
- PEG (poly-ethylene-glycol) 15000 available as laboratory grade from Fluka

Dosing rates of the spray liquid typically varied between 0.5 - 1 grams liquid per minute, except for PVDC where a higher amount was used of about 2 grams. Air inlet temperature was set at 50 - 90 °C. Air inlet flow rate was set at 70 - 80 % of maximum to assure good fluidization, which was monitored visually. If needed, the air flow rate was modified to assure good and even fluidization. Spray on of the coating liquid continued until the desired amount of coating was achieved.

Some coating materials require specific conditions, e.g. defined temperature window, some coatings are more flexible to use. The processing conditions used for the various trials are summarised below in Table 4.

Table 4. Process conditions used in fluid bed coating process.

| Coating Material | Conc. Coating Liquid [%] | Target Coating Levels [%] | T(powder) [° C] | T(air) [°C] |
|---|---|---|---|---|
| Aquapolish MS | 15 | 10 and 30 | 40 - 52 | 55 - 70 |
| PVDC | 52,7 | 10 and 30 | 35 - 55 | 45 - 65 |
| PVOH Mowiol 3-85 | 16,7 | 10 and 30 | 65 - 75 | ~ 90 |
| Natrosol 250L | 4,8 | 10 | 60 - 65 | ~ 80 |
| PEG 15000 | 20 | 10 | ~ 45 | 50 - 56 |

All powders were stored in a climate chamber at 16 °C, 60% Relative Humidity. The weight increase as a function of time was monitored and plotted. The time needed to reach a 10% weight increase was taken from the weight increase versus time plots. This time needed to reach 10% weight increase is given below for the various coating materials tested at coatings levels of 10% and 30%.

Table 5 shows that all coatings applied give a reduction in moisture uptake. The higher the coating level, the slower the moisture uptake. Significantly better results, however, were obtained with the poly-vinyl alcohol coating of the invention, being Mowiol 3-85.

Table 5 Results of moisture absorption measurements for the various coating materials

| Time to reach 10% wt increase [hours] | | | |
|---|---|---|---|
| Uncoated co-granule | 1,3 | | |
| **10% coating** | | **30% coating** | |
| Aquapolish MS | 0,8 | Aquapolish MS | 4,7 |
| PVDC | 2,85 | PVDC | 11 |
| Natrosol | 2,15 | Mowiol 3-85 | 46,6 |
| PEG 15000 | 4,4 | | |
| Mowiol 3-85 | 6,9 | | |

EXAMPLE 3 Comparison of polyvinyl alcohol of the invention with PolyvinylPyrrolidone and polyethylene glycol

Granules were made on the basis of GLDA (Dissolvine GL-47-S and Dissolvine GL-Na-40-S, Arabic gum (laboratory grade, ex Acros Organics), anti-scaling polymer Alcoguard 4160 and the water soluble polymers polyvinyl-alcohol Mowiol 3-85 (available from Kuraray Europe GmbH), poly vinyl-pyrrolidone (PVP) Luvitec VA64 (available from BASF) and poly-ethylene-glycol PEG6000 (available as laboratory grade from Fluka).

First a co-granule of GLDA and Alcoguard 4160 was produced in a spray granulation process using the process as described above. The GLDA/4160 ratio in this case was 80:20. The "uncoated" GLDA/4160 co-granule was subsequently coated in a fluid bed (GEA Aeromatic Strea-1) with in total 10wt% polymer. All polymers were dissolved in water and these mixtures were sprayed on the GLDA co-granule in the fluid bed Aeromatic coater, until 10wt% was coated onto the co-granule.

The powders were stored at 16°C, 60% RH in a climate chamber and the moisture absorption was determined. The results are shown below in Table 6 and Figure 3.

Table 6 Moisture uptake for GLDA/4160 co-granules coated with 10wt% of various polymers and stored at 16 °C, 60% RH.

| GLDA/4160 [80:20] co-qranule coated with 10wt% of | | | | | |
|---|---|---|---|---|---|
| dT [hrs] | PVP - Luvitec VA64 wt% water | PEG6000 wt% water | | PVOH Mowiol 3- 85 | |
| | | | | dT [hrs] | wt% water |
| 0 | 0.00 | 0.00 | | 0.00 | 0.00 |
| 1 | 5.12 | 3.67 | | 1.00 | 1.61 |
| 3.5 | 15.73 | 11.50 | | 3.67 | 4.04 |
| 5.5 | 21.92 | 16.21 | | 6.00 | 6.04 |
| 22.5 | 40.85 | 33.61 | | 7.50 | 7.34 |
| | | | | 23.25 | 17.56 |

Table 6 and Figure 3 show again that poly-vinyl alcohol of the invention gives by far the best results with respect to moisture protection.

Example 4 Coating of GLDA co-granules with polyvinyl-alcohol of the invention

Co-granules of GLDA and Alcoguard 4160 were produced in a spray granulation process. Three types of granules were made on the basis of GLDA (Dissolvine GL-47-S and Dissolvine GL-Na-40-S, anti-scaling polymer Alcoguard 4160, and the water soluble polyvinyl-alcohol Mowiol 3-85 (available from Kuraray Europe GmbH).

The "uncoated" GLDA/4160 co-granule was subsequently coated with Mowiol 3-85 in a fluid bed (GEA Aeromatic Strea-1), using a 16% Mowiol solution in water and using a Würster set-up and a two-fluid nozzle. The amount of Mowiol 3-85 that was sprayed on was varied between about 10wt% and 20wt% (on dry basis).

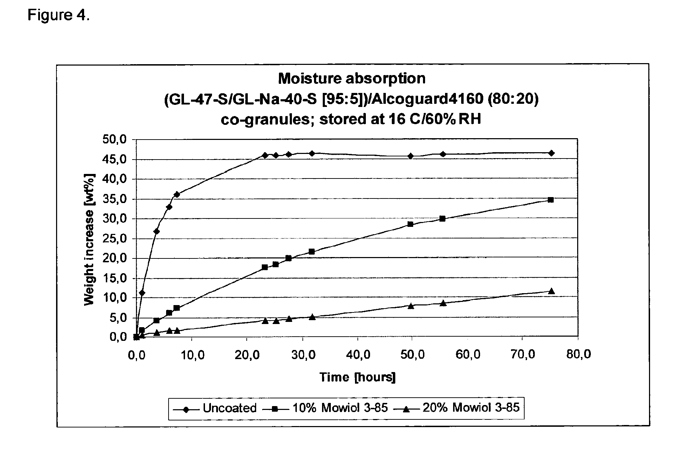

The results of the moisture absorption measurements are given in below Table 7 and Figure 4. The table and figure clearly show that a coating layer of Mowiol 3-85 gives a delay in moisture absorption and the higher the level of Mowiol 3-85 the slower the moisture uptake is.

Table 7

| Time [hours] | [GL47S/GLNa40S (95:5)]/4160 (80:20) uncoated wt% water | [GL47S/GLNa40S (95:5)]/4160 (80:20) + 10% Mowiol coating Wt% water | [GL47S/GLNa40S (95:5)]/4160 (80:20) + 20% Mowiol coating wt% water |
|---|---|---|---|
| 0,0 | 0,0 | 0,0 | 0,0 |
| 1,0 | 11,2 | 1,6 | 0,5 |
| 3,7 | 26,7 | 4,0 | 1,2 |
| 6,0 | 33,0 | 6,0 | 1,6 |
| 7,5 | 36,0 | 7,3 | 1,8 |
| 23,3 | 45,8 | 17,6 | 4,1 |

(continued)

| Time [hours] | [GL47S/GLNa40S (95:5)]/4160 (80:20) uncoated | [GL47S/GLNa40S (95:5)]/4160 (80:20) + 10% Mowiol coating | [GL47S/GLNa40S (95:5)]/4160 (80:20) + 20% Mowiol coating |
|---|---|---|---|
| | wt% water | Wt% water | wt% water |
| 25,3 | 45,9 | 18,2 | 4,1 |
| 27,6 | 46,2 | 19,7 | 4,7 |
| 31,8 | 46,2 | 21,5 | 5,2 |
| 49,8 | 45,7 | 28,3 | 7,7 |
| 55,6 | 46,2 | 29,7 | 8,6 |
| 75,2 | 46,4 | 34,4 | 11,4 |

Example 5 Coating of pure GLDA granules with polyvinyl-alcohol of the invention

Granules of GLDA were produced in a spray granulation process. Three types of granules were made on the basis of GLDA (Dissolvine GL-47-S and Dissolvine GL-Na-40-S available from Akzo Nobel Functional Chemicals LLC, Chicago IL USA) and the water soluble polyvinyl-alcohol Mowiol 3-85 (available from Kuraray Europe GmbH).

The "uncoated" GLDA granule was subsequently coated with Mowiol 3-85 in a fluid bed (GEA Aeromatic Strea-1), using a 16% Mowiol solution in water and using a Würster set-up and a two-fluid nozzle. The amount of Mowiol 3-85 that was sprayed on was varied between about 10wt% and 20wt% (on dry basis).

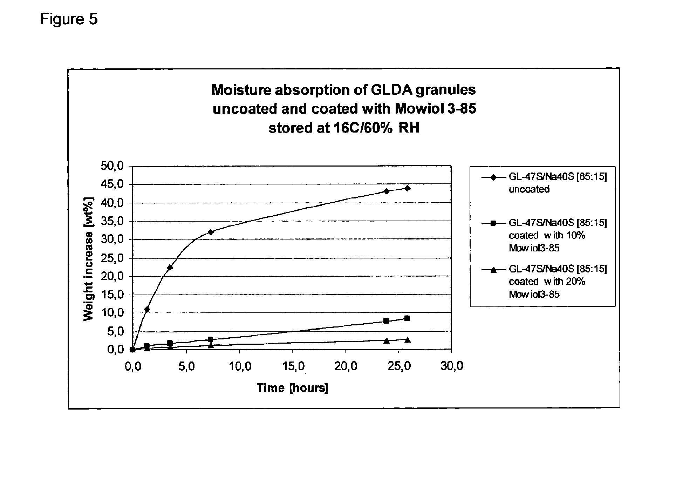

The results of the water absorption measurements are given below in the table 8 and figure 5. The table and figure clearly show that a coating layer of Mowiol 3-85 gives a delay in moisture absorption and that a higher level of Mowiol 3-85 further delays the moisture uptake.

Table 8

| Time [hours] | GL-47S/Na40S [85:15] uncoated | GL-47S/Na40S [85:15] coated with 10% Mowiol3-85 | GL-47S/Na40S [85:15] coated with 20% Mowiol3-85 |
|---|---|---|---|
| | wt% water | wt% water | wt% water |
| 0,0 | 0,0 | 0,0 | 0,0 |
| 1,3 | 11,2 | 1,1 | 0,5 |
| 3,5 | 22,4 | 1,8 | 0,8 |
| 7,3 | 32,0 | 2,6 | 1,2 |
| 23,9 | 43,1 | 7,5 | 2,4 |
| 25,9 | 43,9 | 8,5 | 2,6 |

**Claims**

1. Coated particle containing a particle and a coating, wherein the particle contains glutamic acid N,N-diacetic acid or a partial salt thereof of the formula HnYm-GLDA, wherein Y is a cation, selected from the group of sodium, potassium and mixtures thereof, n+m = 4 and wherein the coating contains at least one vinyl alcohol (co)polymer having a degree of hydrolysis of between 85 and 98% or having a degree of hydrolysis of 98% or higher and a Höppler viscosity (in 4% aqueous solution measured at 20°C in accordance with DIN 53015) of less than 10 cP.

2. Coated particle of claim 1 wherein the vinyl alcohol (co)polymer has a melting point of more than 100 °C.

3. Coated particle of claim 1 or 2 wherein the vinyl alcohol (co)polymer having a degree of hydrolysis of between 85 and 98% has a Höppler viscosity as 4% aqueous solution of 1 to 100 mPas.

4. Coated particle of any one of claims 1 to 3 wherein the vinyl alcohol (co)polymer is polyvinyl alcohol with a degree of hydrolysis of 85 to 98 mol.% and a Höppler viscosity as 4% aqueous solution of 1 to 50 mPas.

5. Coated particle of any one of claims 1 to 4. wherein the coating forms a closed layer as established by Scanning electron microscopy/EDX.

6. Coated particle of any one of claims 1 to 5 wherein in the coating the weight% of vinyl alcohol (co)polymer on dry basis is between 80 and 99.5 wt%

7. Coated particle of any one of claims 1 to 6 comprising two or more coating layers that may be the same or different.

8. Coated particle of any one of claims 1 to 7, comprising an inner coating layer containing a salt and an outer coating layer comprising at least one vinyl alcohol (co)polymer in accordance with claim 1.

9. Coated particle of any one of claims 1to 8 additionally comprising further additives chosen from the group of scale-inhibiting additives, structurants, (co)-builders, pH buffers, chelating agents, flowing aids, and nanoparticles.

10. Coated particle of any one of claims 1 to 9 wherein m is at least 1 and n is at most 3, n+m = 4, and Y is a cation selected from the group of sodium, potassium and mixtures thereof.

11. Process to prepare coated particles containing a particle and a coating, wherein the particle contains glutamic acid N,N-diacetic acid or a partial salt thereof of the formula HnYm-GLDA, wherein Y is a cation, selected from the group of sodium, potassium and mixtures thereof, n+m = 4, and wherein the coating contains at least one vinyl alcohol (co)polymer having a degree of hydrolysis of between 85 and 98% or having a degree of hydrolysis of 98% or higher and a Höppler viscosity (in 4% aqueous solution measured at 20°C in accordance with DIN 53015) of less than 10 cP, comprising the step of applying the coating on the particles..

12. Process of claim 11, wherein in a step preceding applying the coating mixture or the vinyl alcohol (co)polymer on the particle, a salt layer is applied on the particle, preferably a citrate, silicate, glycolate, oxalate, lactate, succinate, malonate, maleate, diglycolate, fumarate, stearate, chloride, nitrate, percarbonate or carbonate salt.

13. Use of the coated particle of any one of claims 1 to 10 in detergents, agriculture, in oil field applications, and in water treatment.

Figures

## Figure 1

## Figure 2

Figure 3 Graphical representation of results shown in table....

**Moisture absorption of GLDA/4160 [80:20] co-granule coated with 10wt% polymer Stored at 16 C, 60 % RH**

Figure 4.

Moisture absorption
(GL-47-S/GL-Na-40-S [95:5])/Alcoguard4160 (80:20)
co-granules; stored at 16 C/60% RH

Figure 5

Moisture absorption of GLDA granules
uncoated and coated with Mowiol 3-85
stored at 16C/60% RH

**Europäisches Patentamt**

**European Patent Office**

**Office européen des brevets**

## EUROPEAN SEARCH REPORT

Application Number

EP 10 16 7517

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Lennart Marten F.: "vinyl alcohol polymers" In: "Encyclopedia of polymer science and engineering", 1989, Wiley interscience publications, USA 17, XP002610050, ISBN: 0171811815 vol. 17, pages 167-198, * page 168 * * page 171; figure 3 * * page 172, paragraph "Solution viscosity" * * page 173; figure 5 * * page 187, paragraph "Specifications and Standards" - page 188 * ----- | 1-13 | INV. C11D3/37 C11D17/00 B01J2/00 C11D3/33 C08J3/12 |
| Y | EP 0 266 796 A1 (SHOWA DENKO KK [JP]) 11 May 1988 (1988-05-11) * page 1, line 1 - line 3 * * page 1, line 40 - line 43 * * page 1, line 44 - line 46 * * page 3, line 24 - line 28 * ----- | 1-13 | |
| Y | US 2008/300159 A1 (SEEBECK TANJA [DE] ET AL) 4 December 2008 (2008-12-04) * claims * ----- | 1-13 | TECHNICAL FIELDS SEARCHED (IPC) C11D B01J C08J |

The present search report has been drawn up for all claims

| Place of search | Date of completion of the search | Examiner |
|---|---|---|
| Munich | 25 November 2010 | Culmann, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 7517

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2010

| Patent document cited in search report | | Publication date | Patent family member(s) | | Publication date |
|---|---|---|---|---|---|
| EP 0266796 | A1 | 11-05-1988 | DE 3778118 D1 | | 14-05-1992 |
| | | | JP 2562624 B2 | | 11-12-1996 |
| | | | JP 63252543 A | | 19-10-1988 |
| | | | US 4898781 A | | 06-02-1990 |
| US 2008300159 | A1 | 04-12-2008 | CA 2633735 A1 | | 12-07-2007 |
| | | | CN 101351539 A | | 21-01-2009 |
| | | | EP 1803801 A1 | | 04-07-2007 |
| | | | EP 1971675 A1 | | 24-09-2008 |
| | | | WO 2007077143 A1 | | 12-07-2007 |
| | | | JP 2009522420 T | | 11-06-2009 |
| | | | KR 20080081960 A | | 10-09-2008 |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006002954 A
- WO 2006003434 A
- GB 2415695 A

- EP 884381 A
- EP 1803801 A

**Non-patent literature cited in the description**

- **C.THIES.** Kirk Othmer Encyclopedia of Chemical Technology, Vol 16, Microencapsulation. JohnWiley&Sons Inc, 2001, vol. 16, 438-463

- **E. TEUNOU ; D. PONCELET.** Batch and continuous fluid bed coating review and state of the art. *J. Food Eng.,* 2002, vol. 53, 325-340